(19) Europäisches Patentamt
European Patent Office
Office européen des brevets

(11) **EP 4 384 433 B1**

(12) **EUROPÄISCHE PATENTSCHRIFT**

(45) Veröffentlichungstag und Bekanntmachung des Hinweises auf die Patenterteilung:
**11.03.2026   Patentblatt 2026/11**

(21) Anmeldenummer: **22758139.4**

(22) Anmeldetag: **03.08.2022**

(51) Internationale Patentklassifikation (IPC):
***G05D 1/00*** *(2024.01)*

(52) Gemeinsame Patentklassifikation (CPC):
**B62D 5/046; B60W 30/10; B60W 50/00; B62D 5/0481; B62D 15/025;** B60W 2050/0001; B60W 2050/0008; B60W 2510/202; B60W 2520/125; B60W 2520/14

(86) Internationale Anmeldenummer:
**PCT/DE2022/200176**

(87) Internationale Veröffentlichungsnummer:
**WO 2023/016613 (16.02.2023 Gazette 2023/07)**

(54) **VERFAHREN UND SYSTEM ZUR STEUERUNG EINES FAHRZEUGS**

METHOD AND SYSTEM FOR CONTROLLING A VEHICLE

PROCÉDÉ ET SYSTÈME DE COMMANDE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **12.08.2021   DE 102021208814**

(43) Veröffentlichungstag der Anmeldung:
**19.06.2024   Patentblatt 2024/25**

(73) Patentinhaber: **AUMOVIO Autonomous Mobility Germany GmbH**
**85057 Ingolstadt (DE)**

(72) Erfinder: **SCHRADER, Moritz**
**90411 Nürnberg (DE)**

(74) Vertreter: **Aumovio Corporation**
**AUMOVIO Germany GmbH**
**Taunusstraße 36**
**80807 München (DE)**

(56) Entgegenhaltungen:
WO-A1-2019/059829       WO-A1-2019/059838
CN-A- 111 176 302        CN-A- 113 126 623
DE-A1- 102009 050 777    DE-A1- 102019 114 585
DE-A1- 4 124 654         US-A- 3 504 291
US-A- 3 938 017          US-B2- 10 773 748

**Beschreibung**

Die Erfindung betrifft ein Verfahren und ein System zur Steuerung eines Fahrzeugs. Insbesondere wird ein Verfahren zur Regelung der Querführung eines Fahrzeugs offenbart, das ein Aufladen integrierender Anteile einer Regeleinrichtung durch Limitierung bzw. Sättigung von fahrdynamischen Größen vermeidet.

Regelungen zur Querführung eines Fahrzeuges bei zumindest teilautonom vollzogenen Fahrvorgängen sind grundsätzlich bekannt. Aufgrund gesetzlicher Vorgaben oder aber aus Komfort- bzw. Sicherheitsgründen kann eine Limitierung oder Sättigung von fahrdynamischen Größen erfolgen. So kann beispielsweise eine Gradientenlimitierung für das Lenkmoment, den Lenkwinkel, die Fahrzeugkrümmung, die Querbeschleunigung oder die Reifenquerkraft vorgesehen sein. Eine Limitierung kann auch aufgrund physikalischer Grenzen auftreten, beispielsweise aufgrund des Lenkwinkelanschlags bei Parkmanövern oder aufgrund der maximalen Reifenquerkraft in hochdynamischen Szenarien. Es ist bekannt, dass eine derartige Limitierung oder Sättigung von fahrdynamischen Größen negative Auswirkungen auf das Querregelverhalten hat, da die nicht umsetzbaren Anteile der fahrdynamischen Größe zu einem Aufladen von integrierenden Anteilen einer Regeleinrichtung führt.

Um diese negativen Auswirkungen zu vermeiden, wird im Stand der Technik eine sog. Back Calculation Anti-Windup Methode angewandt. Bei dieser Methode wird die Differenz aus limitierter
und unlimitierter Stellgröße ermittelt. Diese wird mit einer zu applizierenden Zeitkonstante an den I-Anteil des Reglers zurückgegeben, wodurch sich dieser "entlädt".

Nachteilig an dieser Methode ist, dass diese nur bei einfachen PID-Reglern bzw. Reglern mit klar getrenntem I-Anteil angewendet werden kann. Zustandsregler oder modellbasierte Regler können diese Methode damit nicht ohne Weiteres nutzen. Ein weiteres Problem stellt die Zeitkonstante für die Rückführung der Differenz aus limitierter und unlimitierter Stellgröße dar. Diese muss durch Versuche bzw. durch Simulation bestimmt werden, was aufwendig ist und häufig nur zu unzureichenden Ergebnissen führt. Zuletzt kann die Back Calculation Anti-Windup Methode die aus der Begrenzung resultierenden negativen Auswirkungen häufig nur unzureichend kompensieren, da kaskadierte Regler häufig mehrere I-Anteile haben und ein Aufladen auch durch implizite Integratoren in der Fahrzeug-Trajektorie-Kinematik entstehen kann, was durch die Back Calculation Anti-Windup Methode nicht zu verhindern ist.

Ferner offenbart CN 1 13 126 623 A eine Pfadtracking-Methode für ein autonomes Fahrzeug zur Verfolgung bzw. zum Tracking von Fahrzeugpfaden unter Berücksichtigung eines Problems mit der Sättigung des Steuereingangs.

Die DE 10 2019 114 585 A1 beschreibt ein Verfahren zur Spurhalte- oder Lenkintervention bei einem Fahrzeug. Dabei wird auf Basis eines kinematischen Modells, das eine Fahrzeuggierrate, eine Fahrzeugquerbeschleunigung, eine Fahrzeuggeschwindigkeit, eine Fahrspurmarkierungsposition, einen Fahrspurmarkierungskurs und eine Fahrspurkrümmung berücksichtigt, die Bewegung des Fahrzeugs relativ zur Fahrspur vorhergesagt, wobei ein dabei eingesetzter Trajektorienannäherungsalgorithmus ein Fahrzeugmodell umfasst und Fahrzeugbewegungsbeschränkungen oder physikalische Beschränkungen festlegt. Aus dieser Vorhersage wird eine Lateralabweichung zwischen Fahrzeugposition und Fahrspurmarkierungsposition ermittelt. Auf Grundlage der ermittelten Lateralabweichung wird eine Zeit bis zum Verlassen der Fahrspur (sog. Time-to-Lane-Crossing, TTLC) ermittelt, wobei diese TTLC anschließend durch ein Vorhersagemodell über mehrere Zeitschritte fortgeschrieben und mit einem Konfidenzwert versehen wird, der die Prognosegüte beschreibt. Auf Basis der fortgeschriebenen TTLC und des zugeordneten Konfidenzwerts wird schließlich eine Lenkintervention aktiviert.

Die DE 41 24 654 A1 beschreibt ein Verfahren zur kontinuierlichen und automatischen Führung eines Fahrzeugs basierend auf einer geschätzten Relativlage des Fahrzeugs zur Fahrbahn. Dabei werden Bilddaten eines Kamerasystems des Fahrzeugs verarbeitet, wobei die Auswertung modellgestützt mittels eines rekursiven Schätzverfahrens erfolgt, das verschiedene Teilmodelle wie ein Fahrzeugquerdynamikmodell und ein geometrisches Fahrbahnmodell einbezieht. Es werden Parameter des Fahrbahnverlaufs, insbesondere eine horizontale und vertikale Krümmung, bestimmt und zur Zustandsschätzung verwendet, um die Fahrzeuglage relativ zur Fahrbahn zu ermitteln. Die ermittelten Zustandsgrößen, wie Seitenablage, Gierwinkel und Fahrbahnkrümmung, dienen als Grundlage für die Ableitung von Steuerdaten zur Fahrzeugführung. Dabei wird die relative Fahrzeuglage zur Fahrbahn genutzt, um eine zukünftige Trajektorie entlang des modellierten Fahrbahnverlaufs zu bestimmen. Die Differenz zwischen der gewünschten Fahrspur und der aktuellen Fahrzeuglage als Regelabweichung interpretiert und durch ein Regelungssystem verarbeitet, das auf Basis eines Fahrzeugmodells die erforderlichen Lenkwinkelbefehle berechnet. Diese Regelabweichung kann in Form eines lateralen Versatzes oder eines Kurswinkelfehlers auftreten und wird durch geeignete Steueralgorithmen, wie Zustandsregler oder modellbasierte Regler, in eine Stellgröße für die Lenkung überführt. Dabei werden die Fahrzeugdynamik sowie die Fahrbahngeometrie berücksichtigt, um eine stabile und vorausschauende Führung entlang der Fahrspur zu ermöglichen. Die Steuerung erfolgt durch kontinuierliche Anpassung der Lenkwinkelbefehle, wobei die Regelung auf die geschätzten Zustandsgrößen reagiert und diese zyklisch aktualisiert werden.

Die DE 10 2009 050 777 A1 beschreibt ein Verfahren zur Ermittlung einer fahrzeugbezogenen Zustandsgröße basierend auf einer eine Fahrtrichtung des Kraftfahrzeugs beeinflussenden Steuergröße. Dabei wird eine Seitenkraft an den Rädern des Fahrzeugs aus dem Lenkmoment sowie einem Übertragungsverhalten der Lenkung berechnet. Die berechnete Seitenkraft wird in ein Fahrdynamikmodell eingespeist, das auf einem Einspurmodell basiert und zur Bestimmung von fahrdynamischen Zustandsgrößen wie Giergeschwindigkeit und Quergeschwindigkeit dient. Die Seitenkraft wird zudem und zusätzlich zu anderen Sensorsignalen als Messgröße in einem Beobachtermodell verwendet, um Größen oder Zustände wie Fahrzeugmasse und Trägheit zu schätzen. Um dabei die Genauigkeit zu erhöhen, werden alternative Messgleichungen im Beobachtermodell eingesetzt, die auf Differentiation verzichten und stattdessen direkt messbare Größen wie Seitenkraft und Lenkwinkel verwenden. Dadurch sollen die Abhängigkeit von schwer bestimmbaren Fahrzeugparametern reduziert und die Robustheit des Modells verbessert werden.

Es ist Aufgabe der Erfindung, ein Verfahren zur Steuerung eines Fahrzeugs anzugeben, das eine technisch einfache und effektive Unterdrückung von Aufladeeffekten auch bei Zustandsreglern bzw. modellbasierten Reglern ermöglicht.

Die Aufgabe wird durch ein Verfahren mit den Merkmalen des unabhängigen Patentanspruchs 1 gelöst. Bevorzugte Ausführungsformen sind Gegenstand der Unteransprüche. Ein System zur Steuerung eines Fahrzeugs ist Gegenstand des nebengeordneten Patentanspruchs 11.

Gemäß einem ersten Aspekt wird ein Verfahren zur Steuerung eines Fahrzeugs offenbart. Das Fahrzeug umfasst ein Fahrassistenzsystem, mittels dem zumindest teilautonome Fahrfunktionen durchgeführt werden. Zur Regelung der Fahrfunktionen des Fahrzeugs ist ein Regelkreis vorgesehen, der als Sollgröße Informationen beispielsweise von einem Trajektorienplaner erhält. Der Regelkreis weist zumindest einen Regler auf, der zumindest eine fahrdynamische Größe mittels eines Begrenzers oder durch Sättigung limitiert. Mittels eines Fahrzeugdynamikmodells wird die aufgrund der Limitierung entstehende Änderung der fahrdynamischen Größe in eine Krümmungs- und/oder Gierratenrestgröße des Fahrzeugs überführt. In anderen Worten wird die Differenz aus limitierter und unlimitierter fahrdynamischer Größe bestimmt, die der nicht umgesetzten fahrdynamischen Größe entspricht. Diese Differenz wird in eine Krümmungs- und/oder Gierratenrestgröße überführt, die angibt, welcher Rest an Fahrzeugkrümmung bzw. Gierrate aufgrund der Limitierung bzw. Sättigung nicht umgesetzt werden konnte.

Anschließend wird die Krümmungs- und/oder Gierratenrestgröße des Fahrzeugs mittels eines kinematischen Modells des Fahrzeugs in eine begrenzungsbedingt entstandene Lateral- und/oder Kurswinkelabweichung überführt. In anderen Worten wird damit ermittelt, welche laterale Trajektorienabweichung bzw. Kurswinkelabweichung durch die Limitierung bzw. Sättigung der zumindest einen fahrdynamischen Größe entsteht.

Daraufhin wird eine gemessene Lateral- und/oder Kurswinkelabweichung des Fahrzeugs basierend auf der begrenzungsbedingt entstandenen Lateral- und/oder Kurswinkelabweichung modifiziert, wodurch eine modifizierte Lateral- und/oder Kurswinkelabweichung gebildet wird. Insbesondere wird die begrenzungsbedingt entstandenen Lateral- und/oder Kurswinkelabweichung von der gemessenen Lateral- und/oder Kurswinkelabweichung subtrahiert, so dass die aufgrund der Limitierung bzw. Sättigung der zumindest einen fahrdynamischen Größe entstehende Abweichung kompensiert wird.

Zuletzt wird basierend auf der Sollgröße und basierend auf der modifizierten Lateral- und/oder Kurswinkelabweichung ein Regelfehler berechnet. In anderen Worten wird damit nicht die gemessene Lateral- und/oder Kurswinkelabweichung als Regelgröße zurückgeführt und zur Ermittlung des Regelfehlers (Differenz aus Sollgröße und Regelgröße) verwendet, sondern die modifizierte Lateral- und/oder Kurswinkelabweichung.

Das erfindungsgemäße Verfahren hat den technischen Vorteil, dass es unabhängig von der eingesetzten Reglerstruktur ist. So kann es beispielsweise sowohl bei einem einfachen PID-Regler als auch bei einem zustandsbasierten Regler eingesetzt werden. Zudem müssen bei dem erfindungsgemäßen Verfahren keine Applikationsparameter bestimmt werden, da als Rückführübertragungsfunktion ein Modell für die Fahrzeug-Fahrbahn-Kinematik verwendet wird. Zuletzt ist es möglich, das durch die Limitierung bzw. Sättigung einer oder mehrerer unterschiedlicher fahrdynamischer Größen entstehende Aufladen des Reglers effektiv zu verhindern.

Gemäß einem Ausführungsbeispiel ist die fahrdynamische Größe der Lenkwinkel, das Lenkmoment, die Fahrzeugkrümmung, die Querbeschleunigung des Fahrzeugs und/oder die Reifenquerkraft des Fahrzeugs. Dabei kann die Limitierung bzw. Sättigung einer einzigen oder aber auch mehrerer der genannten fahrdynamischen Größen durch das offenbarte Verfahren kompensiert werden.

Gemäß einem Ausführungsbeispiel umfasst der zumindest eine Regler eine Regelkaskade mit einer ersten und einer zweiten Regeleinrichtung. Die erste Regeleinrichtung bildet beispielsweise eine äußere, überlagerte Regeleinrichtung, die zweite Regeleinrichtung eine innere, unterlagerte Regeleinrichtung. Insbesondere erfolgt in dem Regelkreis eine modifizierte Rückführung derart, dass eine Limitierung bzw. Sättigung im Bereich der zweiten Regeleinrichtung keine Auflade-Effekte im Bereich der ersten Regeleinrichtung hervorruft.

Gemäß einem Ausführungsbeispiel umfasst die erste Regeleinrichtung eine Kinematikregelung und die zweite Regeleinrichtung eine Fahrdynamikregelung.

Gemäß einem Ausführungsbeispiel wird durch die erste Regeleinrichtung ein Sollkrümmungswert des Fahrzeugs bereitgestellt. Damit wird durch die erste Regeleinrichtung eine Lateral- bzw. Kurswinkelabweichung in einen Sollkrümmungswert des Fahrzeugs überführt.

Gemäß einem Ausführungsbeispiel wird durch die zweite Regeleinrichtung ein Sollkrümmungswert des Fahrzeugs in einen Solllenkwinkel überführt. Damit kann durch das Zusammenwirken der ersten und zweiten Reglereinheit eine Lateral- bzw. Kurswinkelabweichung in eine Lenkwinkelinformation überführt werden. Die zweite Regeleinrichtung kann zudem eine Lenkwinkelregelung umfassen.

Gemäß einem Ausführungsbeispiel erfolgt die Limitierung der fahrdynamischen Größe in der zweiten Regeleinrichtung. Alternativ kann die Limitierung der fahrdynamischen Größe auch zwischen der zweiten Regeleinrichtung und der Regelstrecke erfolgen, wobei die Regelstrecke beispielsweise die Fahrzeuglenkung umfasst.

Gemäß einem Ausführungsbeispiel ist das Fahrzeugdynamikmodell dazu ausgebildet, aus einem begrenzungsbedingt entstehenden Differenzwert der fahrdynamischen Größe eine Krümmungs- und/oder Gierratenrestgröße zu ermitteln. Der begrenzungsbedingt entstehende Differenzwert der fahrdynamischen Größe ergibt sich aus der Differenz des unlimitierten und des limitierten Werts der fahrdynamischen Größe und gibt damit an, welcher Anteil der fahrdynamischen Größe aufgrund der Limitierung bzw. Sättigung nicht umgesetzt werden kann. Dieser nicht umgesetzte Anteil wird anschließend durch das Fahrzeugdynamikmodell in die Krümmungs- und/oder Gierratenrestgröße überführt.

Gemäß einem Ausführungsbeispiel wird im Fahrzeugdynamikmodell ein Einspurmodell, insbesondere ein lineares Einspurmodell des Fahrzeugs implementiert. Durch das Fahrzeugdynamikmodell kann der begrenzungsbedingt entstehende Differenzwert der fahrdynamischen Größe in eine fahrzeugspezifische Krümmungs- und/oder Gierratenrestgröße umgerechnet werden.

Gemäß einem Ausführungsbeispiel wird die durch die Limitierung entstehende Änderung der fahrdynamischen Größe durch eine Differenzbildung zwischen der unlimitierten fahrdynamischen Größe und der limitierten fahrdynamischen Größe gebildet. Diese Differenz gibt an, welcher Anteil der fahrdynamischen Größe nicht umgesetzt werden kann und ist damit ein Maß für den die Aufladung der integrierenden Anteile hervorrufenden Regelfehler.

Gemäß einem Ausführungsbeispiel wird die gemessene Lateral- und/oder Kurswinkelabweichung von einem Odometriesystem des Fahrzeugs bereitgestellt. Im Falle der Begrenzung der fahrdynamischen Größe weicht die gemessene Lateral- und/oder Kurswinkelabweichung von der vorgegebenen Lateral- und/oder Kurswinkelabweichung ab. Durch das Subtrahieren der begrenzungsbedingt entstandenen Lateral- und/oder Kurswinkelabweichung von der gemessenen Lateral- und/oder Kurswinkelabweichung wird der Einfluss der Begrenzung kompensiert.

Gemäß einem weiteren Aspekt betrifft die Erfindung ein System zur Steuerung eines Fahrzeugs umfassend ein Fahrassistenzsystem, mittels dem zumindest teilautonome Fahrfunktionen durchführbar sind. Zur Regelung der Fahrfunktionen des Fahrzeugs ist ein Regelkreis vorgesehen, der als Sollgröße Informationen von einem Trajektoriefolgeregler erhält. Es ist zumindest ein Regler vorgesehen, der zumindest eine fahrdynamische Größe mittels eines Begrenzers oder durch Sättigung limitiert. Der Regelkreis ist dazu ausgebildet:

- mittels eines Fahrzeugdynamikmodells die aufgrund der Limitierung entstehende Änderung der fahrdynamischen Größe in eine Krümmungs- und/oder Gierratenrestgröße des Fahrzeugs zu überführen;
- die Krümmungs- und/oder Gierratenrestgröße des Fahrzeugs mittels eines kinematischen Modells des Fahrzeugs in eine begrenzungsbedingt entstandene Lateral- und/oder Kurswinkelabweichung zu überführen;
- eine gemessene Lateral- und/oder Kurswinkelabweichung des Fahrzeugs basierend auf der begrenzungsbedingt entstandenen Lateral- und/oder Kurswinkelabweichung zu modifizieren;
- eine modifizierte Lateral- und/oder Kurswinkelabweichung zu bilden; und
- basierend auf der Sollgröße und basierend auf der modifizierten Lateral- und/oder Kurswinkelabweichung einen Regelfehler zu berechnen.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:

Fig. 1     beispielhaft eine schematische Darstellung eines Regelkreises zur Fahrzeugquerführung;

Fig. 2     beispielhaft eine schematische Darstellung des Regelkreises gemäß Fig. 1, der zur Kompensation von Begrenzungseffekten einen weiteren Rückführungspfad aufweist, mittels dem die Regelgröße modifiziert wird;

Fig. 3     beispielhaft eine schematische Darstellung des Regelkreises ähnlich der Fig. 2, wobei die Limitierung des Lenkwinkels und die Berechnung der begrenzungsbedingt entstehenden Änderung der fahrdynamischen Größe angedeutet ist; und

Fig. 4 beispielhaft eine schematische Darstellung einer beispielhaften Ausgestaltung des Fahrzeugdynamikmodells der Figuren 2 und 3.

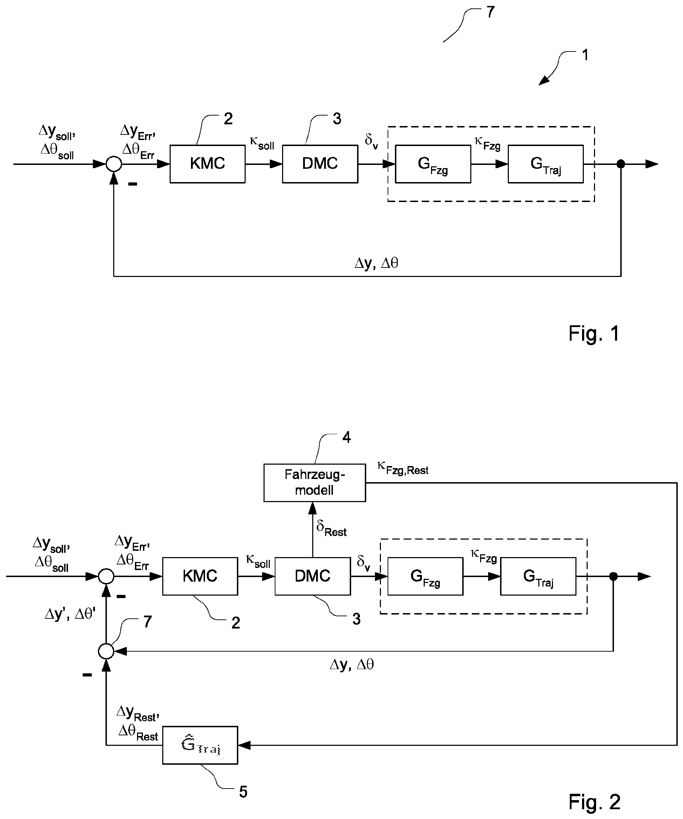

Figur 1 zeigt beispielhaft und schematisch ein Blockdiagramm eines Regelkreises 1, der zur Regelung von zumindest teilautonomen Fahrfunktionen eines Fahrassistenzsystems eines Fahrzeugs verwendet werden kann. Der Regelkreis 1 ist zur Fahrzeugquerführung ausgebildet.

Der Regelkreis umfasst zumindest einen Regler, im gezeigten Ausführungsbeispiel eine erste und eine zweite Regeleinrichtung 2, 3. Die erste Regeleinrichtung 2 ist beispielsweise eine Kinematik-Regelung (KMC: Kinematic Motion Controller), auch als Trajektorienfolgeregler bezeichnet. Diese erste Regeleinrichtung 2 stellt beispielsweise als Ausgangsgröße eine Sollkrümmung $K_{soll}$ bereit. Diese Ausgangsgröße wird der zweiten Regeleinrichtung 3 als Eingangsgröße bereitgestellt. Die zweite Regeleinrichtung 3 ist beispielsweise eine Fahrzeugdynamik-Regeleinrichtung (DMC: Dynamic Motion Controller), die als Ausgangsgröße in einen Solllenkwinkel $\delta_V$ bereitstellt. Die zweite Regeleinrichtung 3 kann insbesondere auch einen Lenkwinkelregler als unterlagerten Regelkreis enthalten, der als Ausgangsgröße ein Soll-Drehmoment für den Lenkaktuator bereitstellt. Die zweite Regeleinrichtung 3 kann beispielsweise eine modellbasierte Fahrzeugdynamik-Regeleinrichtung sein.

Der Solllenkwinkel $\delta_V$ wird anschließend an das zu regelnde System, d.h. die Regelstrecke übertragen. Die Regelstrecke umfasst insbesondere das Lenksystem des Fahrzeugs. Die Regelstrecke lässt sich beispielsweise in zwei Übertragungsfunktionen aufgliedern, und zwar die erste Übertragungsfunktion $G_{Fzg}$ und die zweite Übertragungsfunktion $G_{traj}$. $G_{Fzg}$ beschreibt dabei das Übertragungsverhalten vom Soll-Lenkwinkel $\delta_V$ (Ausgang des DMC) auf die sich ergebende Fahrzeugkrümmung, $G_{traj}$ beschreibt den dynamischen Aufbau des Kurswinkels $\Delta\theta$ sowie der Lateralabweichung $\Delta y$ (Querrichtung) des auf der Trajektorie zu führenden Punktes in einem lokal fixen Koordinatensystem.

Zur Rückkopplung wird eine gemessene Lateral- und/oder Kurswinkelabweichung $\Delta y$, $\Delta\theta$, die beispielsweise von dem Odometriesystem des Fahrzeugs bereitgestellt wird, an den Eingang des Regelkreises 1 zurückgeführt, so dass die Sollgrößen $\Delta y_{soll}$, $\Delta\theta_{soll}$ (beispielsweise bereitgestellt von einer Trajektorienplanungseinheit) mittels der gemessenen Lateral- und/oder Kurswinkelabweichung $\Delta y$, $\Delta\theta$ in einen Regelfehler $\Delta y_{Err}$, $\Delta\theta_{Err}$ überführt werden, der der ersten Regeleinrichtung 2 als Eingangsinformation bereitgestellt wird.

Aufgrund gesetzlicher Vorgaben, aber auch aus anderen Gründen kann in der zweiten Regeleinrichtung 3 eine Limitierung fahrdynamischer Größen erfolgen. Beispielsweise kann eine Limitierung des Lenkwinkels, des Lenkmoments, der Fahrzeugkrümmung, der Querbeschleunigung, oder der Reifenquerkraft erfolgen.

Diese Limitierungen können zu einem Aufladen von integrierenden Anteilen (sog. Windup) in der ersten Regeleinrichtung 2 führen, was zu einer Überkompensation und Schwingungen des Fahrzeugs bis hin zu dessen Instabilität führen kann.

Fig. 2 zeigt einen modifizierten Regelkreis 1, mittels dem die aus der Limitierung resultierenden störenden Effekte vorteilhaft unterbunden bzw. abgemildert werden können.

Dabei wird zunächst die aufgrund der Limitierung entstehende Änderung der fahrdynamischen Größe $\delta_{Rest}$, im Folgenden auch Restgröße $\delta_{Rest}$ genannt, ermittelt, um die die fahrdynamische Größe, im vorliegenden Fall der Lenkwinkel, begrenzt wurde. Diese Restgröße $\delta_{Rest}$ wird an ein Fahrdynamikmodell 4 übertragen. Zusätzlich ist es im Falle einer modellbasierten Fahrzeugdynamik-Regeleinrichtung als zweiter Regeleinrichtung 3 möglich, aus dem Restbetrag der fahrdynamischen Größe, die aufgrund der Limitierung nicht umgesetzt werden kann, eine Restkrümmung zu bestimmen.

Das Fahrdynamikmodell 4 kann integraler Bestandteil der zweiten Regeleinrichtung 3 sein. Alternativ kann das Fahrdynamikmodell 4 als ein separates Regelungsmodul gebildet sein.

Das Fahrdynamikmodell 4 ist dazu ausgebildet, die Restgröße $\delta_{Rest}$ und ggf. die daraus resultierende Restkrümmung in eine daraus resultierende Krümmungs- und/oder Gierratenrestgröße $K_{Fzg,Rest}$ des Fahrzeugs abzubilden. Das Fahrdynamikmodell 4 kann beispielsweise durch ein lineares Einspurmodell gebildet werden.

Das Fahrdynamikmodell 4 setzt dabei die aufgrund der Limitierung entstehende Änderung der fahrdynamischen Größe $\delta_{Rest}$ in eine fahrdynamische Restgröße um, beispielsweise die Krümmungs- und/oder Gierratenrestgröße $K_{Fzg,Rest}$. Diese wird anschließend an ein Fahrzeug-Trajektorie-Modell 5 zurückgeführt. Das Fahrzeug-Trajektorie-Modell 5 beschreibt beispielsweise das kinematische Verhalten einer Punktmasse auf einer Bahn. Dieses Fahrzeug-Trajektorie-Modell 5 kann integraler Bestandteil der ersten Regeleinrichtung 2 sein. Alternativ kann das Fahrzeug-Trajektorie-Modell 5 als ein separates Regelungsmodul gebildet sein.

Das Fahrzeug-Trajektorie-Modell 5 ist dazu ausgebildet, aus der Krümmungs- und/oder Gierratenrestgröße $K_{Fzg,Rest}$ eine begrenzungsbedingt entstandene Lateral- und/oder Kurswinkelabweichung $\Delta y_{Rest}$, $\Delta\theta_{Rest}$ zu ermitteln.

Die Übertragungsfunktion des Fahrzeug-Trajektorie-Modells 5 lässt sich wie folgt darstellen:

$$\widehat{G_{\Delta\Theta,\kappa}} = \frac{\Delta\Theta}{\kappa_{Fzg}} = \frac{v}{s};$$

$$\widehat{G_{\Delta y, \kappa}} = \frac{\Delta y}{\kappa_{Fzg}} = \frac{v^2}{s^2};$$

wobei v die Längsgeschwindigkeit und K$_{Fzg}$ die gefahrene Krümmung ist.

Die begrenzungsbedingt entstandene Lateral- und/oder Kurswinkelabweichung $\Delta y_{Rest}$, $\Delta\theta_{Rest}$ wird anschließend von der gemessenen Lateral- und/oder Kurswinkelabweichung $\Delta y$, $\Delta\theta$ am Subtraktionspunkt 7 abgezogen, wodurch eine modifizierte Lateral- und/oder Kurswinkelabweichung $\Delta y'$, $\Delta\theta'$ entsteht. Dies hat zur Folge, dass die Stellgröße der ersten Regeleinrichtung 2 genau um den Betrag reduziert wird, der über das jeweilige Sättigungslimit der fahrdynamischen Größe hinausgeht und ohnehin nicht umgesetzt werden kann. Die erste Regeleinrichtung 2 arbeitet somit stets an der Begrenzung, sobald eine Limitierung bzw. Sättigung einer fahrdynamischen Größe erreicht wurde.

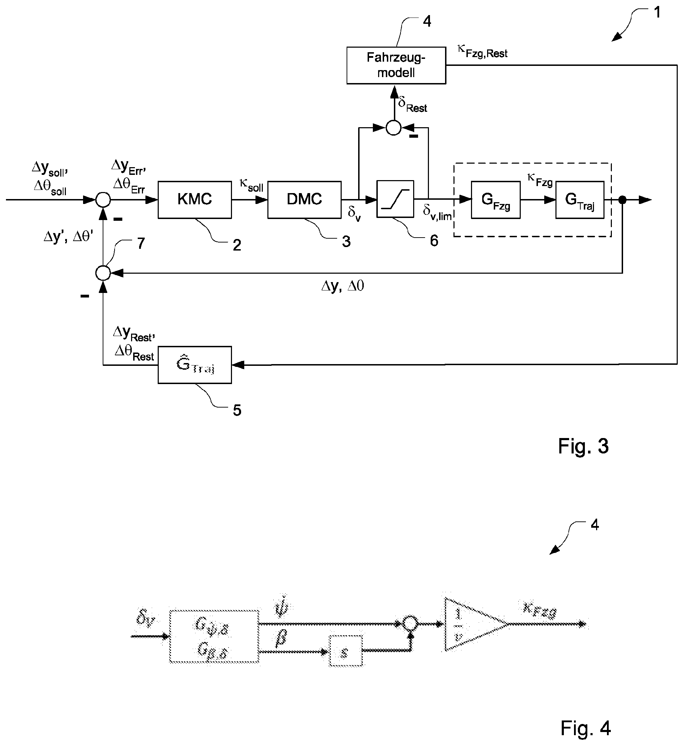

Fig. 3 zeigt ein spezifisches Ausführungsbeispiel der Erfindung mit einer in der Praxis häufig vorkommenden Begrenzung des Soll-Lenkwinkels $\delta_v$ mittels eines Begrenzers 6. Der Begrenzer 6 ist beispielsweise dazu ausgebildet, den Soll-Lenkwinkel $\delta_v$ der Höhe nach auf einen Lenkwinkelwert $\delta_{v,lim}$ zu begrenzen. Die Limitierung des Soll-Lenkwinkels $\delta_v$ erfolgt beispielsweise aus Komfort- und Sicherheitsgründen. Dieser wird häufig auf eine vorgegebene Änderungsrate limitiert.

Durch eine Differenzbildung zwischen dem Soll-Lenkwinkel $\delta_v$ und dem begrenzten Lenkwinkel $\delta_{v,lim}$ lässt sich die Restgröße $\delta_{Rest}$ ermitteln, um die der Lenkwinkel begrenzt wurde. Diese Restgröße $\delta_{Rest}$ kann aufgrund der Limitierung von der Regelung nicht umgesetzt werden. Durch das Fahrzeugdynamikmodell 4, das das Fahrzeugmodell, hier die Übertragungsfunktion von Solllenkwinkel auf Fahrzeugkrümmung nachbildet, wird die Krümmungs- und/oder Gierratenrestgröße K$_{Fzg,Rest}$ ermittelt, die aufgrund der Limitierung entsteht und ebenfalls nicht umgesetzt werden kann. Diese wird an das Fahrzeug-Trajektorie-Modell 5 weitergeleitet. Wie zuvor beschrieben, setzt das Fahrzeug-Trajektorie-Modell 5 die Krümmungs- und/oder Gierratenrestgröße K$_{Fzg,Rest}$ in eine begrenzungsbedingt entstandene Lateral- und/oder Kurswinkelabweichung $\Delta y_{Rest}$, $\Delta\theta_{Rest}$ um.

Diese Lateral- und/oder Kurswinkelabweichung $\Delta y_{Rest}$, $\Delta\theta_{Rest}$ wird von einer gemessenen Lateral- und/oder Kurswinkelabweichung $\Delta y$, $\Delta\theta$ und die daraus entstehende modifizierte Lateral- und/oder Kurswinkelabweichung $\Delta y'$, $\Delta\theta'$ wird zur Modifikation der Sollgröße am Eingang des Regelkreises 1 verwendet.

Fig. 4 zeigt beispielhaft ein schematisches Diagramm, das das Fahrzeugdynamikmodell 4 zur Umsetzung des Lenkwinkels $\delta_v$ in die Fahrzeugkrümmung K$_{Fzg}$ veranschaulicht.

Die Eingangsgröße für das Fahrzeugdynamikmodell 4 ist der Lenkwinkel an der Vorderachse $\delta_v$. Dieser Lenkwinkel $\delta_v$ wird den Übertragungsfunktionen $G_{\psi,\delta}$

und $G_{\beta,\delta}$ als Eingangsgröße bereitgestellt, wobei $\beta$ den Schwimmwinkel und $_\psi$ die Gierrate bezeichnet. Diese Übertragungsfunktionen sind beispielsweise aus dem linearen Einspurmodell entnommen.

Über den Zusammenhang

$$\kappa_{Fzg} = \frac{\dot\psi + \dot\beta}{v}$$

erhält man anschließend die gefahrene Fahrzeugkrümmung K$_{Fzg}$, welche als Rückführung zum Fahrzeug-Trajektorie-Modell 5 dient.

Wie zuvor ausgeführt bezeichnet $\delta_v$ den Lenkwinkel an der Vorderachse des Fahrzeugs. Es versteht sich, dass in gleicher Weise auch der Lenkradwinkel limitiert werden kann. In diesem Fall müsste die Lenkübersetzung mitberücksichtigt werden. Zudem könnte optional noch ein Modell für Torsionssteifigkeit und das Spiel in der Lenkung berücksichtigt werden.

Voranstehend wurde die Kompensation von Einflüssen, die durch Limitierung bzw. Sättigung einer einzigen Größe, beispielsweise des Lenkwinkels, entstehen, beschrieben. Es versteht sich, dass das vorgeschlagene Verfahren es ebenso ermöglicht, die negativen Einflüsse einer Limitierung bzw. Sättigung mehrerer Größen zu kompensieren. Dabei wird jeweils die Differenz aus limitierter und unlimitierter Größe berechnet, anschließend die durch die Limitierung nicht umgesetzte Restgröße in eine Krümmungs- und/oder Gierratenrestgröße überführt und dann die Krümmungs- und/oder Gierratenrestgröße mittels eines kinematischen Modells des Fahrzeugs in eine begrenzungsbedingt entstandene Lateral- und/oder Kurswinkelabweichung umgerechnet. Anschließend werden die für sämtliche limitierte Größen ermittelten Lateral- und/oder Kurswinkelabweichungen von der gemessenen Lateral- und/oder Kurswinkelabweichung subtrahiert. Dadurch wird eine Kompensation der negativen Effekte, die durch die Limitierung bzw. Sättigung mehrerer Größen entstehen, ermöglicht.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

**Patentansprüche**

**1.** Verfahren zur Steuerung eines Fahrzeugs umfassend ein Fahrassistenzsystem, mittels dem zumindest teilautonome Fahrfunktionen durchgeführt werden, wobei zur Regelung der Fahrfunktionen des Fahrzeugs ein Regelkreis (1) vorgesehen ist, der als Sollgröße Informationen ($\Delta y_{soll}$, $\Delta\theta_{soll}$) erhält, dass zumindest ein Regler vorgesehen ist, der zumindest eine fahrdynamische Größe mittels eines Begrenzers (6) oder durch Sättigung limitiert, dass mittels eines Fahrzeugdynamikmodells (4) die aufgrund der Limitierung entstehende Änderung der fahrdynamischen Größe ($\delta_{Rest}$) in eine Krümmungs- und/oder Gierratenrestgröße ($K_{Fzg,Rest}$) des Fahrzeugs überführt wird, dass die Krümmungs- und/oder Gierratenrestgröße ($K_{Fzg,Rest}$) des Fahrzeugs mittels eines kinematischen Modells (5) des Fahrzeugs in eine begrenzungsbedingt entstandene Lateral- und/oder Kurswinkelabweichung ($\Delta y_{Rest}$, $\Delta\theta_{Rest}$) überführt wird und dass eine gemessene Lateral- und/oder Kurswinkelabweichung ($\Delta y$, $\Delta\theta$) des Fahrzeugs basierend auf der begrenzungsbedingt entstandenen Lateral- und/oder Kurswinkelabweichung ($\Delta y_{soll}$, $\Delta\theta_{soll}$) modifiziert wird, wodurch eine modifizierte Lateral- und/oder Kurswinkelabweichung ($\Delta y'$, $\Delta\theta'$) gebildet wird und wobei basierend auf der Sollgröße ($\Delta y_{soll}$, $\Delta\theta_{soll}$) und basierend auf der modifizierten Lateral- und/oder Kurswinkelabweichung ($\Delta y'$, $\Delta\theta'$) ein Regelfehler ($\Delta y_{Err}$, $\Delta\theta_{Err}$) berechnet wird.

2. Verfahren nach Anspruch 1, **dadurch gekennzeichnet, dass** die fahrdynamische Größe der Lenkwinkel, das Lenkmoment, die Fahrzeugkrümmung, die Querbeschleunigung des Fahrzeugs und/oder die Reifenquerkraft des Fahrzeugs ist.

3. Verfahren nach Anspruch 1 oder 2, **dadurch gekennzeichnet, dass** der zumindest eine Regler eine Regelkaskade mit einer ersten und einer zweiten Regeleinrichtung (2, 3) umfasst.

4. Verfahren nach Anspruch 3, **dadurch gekennzeichnet, dass** die erste Regeleinrichtung (2) eine Kinematikregelung und die zweite Regeleinrichtung (3) eine Fahrdynamikregelung umfasst.

5. Verfahren nach Anspruch 3 oder 4, **dadurch gekennzeichnet, dass** durch die erste Regeleinrichtung (2) ein Sollkrümmungswert ($K_{soll}$) bereitgestellt wird.

6. Verfahren nach einem der Ansprüche 3 bis 5, **dadurch gekennzeichnet, dass** durch die zweite Regeleinrichtung (3) ein Sollkrümmungswert ($K_{soll}$) in einen Solllenkwinkel ($\delta_v$) überführt wird.

7. Verfahren nach einem der Ansprüche 3 bis 6, **dadurch gekennzeichnet, dass** die Limitierung der fahrdynamischen Größe in der zweiten Regeleinrichtung (3) erfolgt.

8. Verfahren nach einem der vorhergehenden Ansprüche, **dadurch gekennzeichnet, dass** das Fahrzeugdynamikmodell (4) dazu ausgebildet ist, aus einem begrenzungsbedingt entstehenden Differenzwert der fahrdynamischen Größe ($\delta_{Rest}$) eine Krümmungs- und/oder Gierratenrestgröße

($K_{Fzg,Rest}$) zu ermitteln.

9. Verfahren nach Anspruch 8, **dadurch gekennzeichnet, dass** im Fahrzeugdynamikmodell (4) ein Einspurmodell des Fahrzeugs implementiert ist.

10. Verfahren nach einem der vorhergehenden Ansprüche, **dadurch gekennzeichnet, dass** die durch die Limitierung entstehende Änderung der fahrdynamischen Größe ($\delta_{Rest}$) durch eine Differenzbildung zwischen der unlimitierten fahrdynamischen Größe ($\delta_v$) und der limitierten fahrdynamischen Größe ($\delta_{v,lim}$) gebildet wird.

11. Verfahren nach einem der vorhergehenden Ansprüche, **dadurch gekennzeichnet, dass** die gemessene Lateral- und/oder Kurswinkelabweichung ($\Delta y$, $\Delta\theta$) von einem Odometriesystem des Fahrzeugs bereitgestellt wird.

12. System zur Steuerung eines Fahrzeugs umfassend ein Fahrassistenzsystem, mittels dem zumindest teilautonome Fahrfunktionen durchführbar sind, wobei zur Regelung der Fahrfunktionen des Fahrzeugs ein Regelkreis (1) vorgesehen ist, der als Sollgröße Informationen ($\Delta y_{soll}$, $\Delta\theta_{soll}$) erhält, dass zumindest ein Regler vorgesehen ist, der zumindest eine fahrdynamische Größe mittels eines Begrenzers (6) oder durch Sättigung limitiert, dass der Regelkreis dazu ausgebildet ist:

- mittels eines Fahrzeugdynamikmodells (4) die aufgrund der Limitierung entstehende Änderung der fahrdynamischen Größe ($\delta_{Rest}$) in eine Krümmungs- und/oder Gierratenrestgröße ($K_{Fzg,Rest}$) des Fahrzeugs zu überführen;
- die Krümmungs- und/oder Gierratenrestgröße ($K_{Fzg,Rest}$) des Fahrzeugs mittels eines kinematischen Modells (5) des Fahrzeugs in eine begrenzungsbedingt entstandene Lateral- und/oder Kurswinkelabweichung ($\Delta y_{Rest}$, $\Delta\theta_{Rest}$) zu überführen;
- eine gemessene Lateral- und/oder Kurswinkelabweichung ($\Delta y$, $\Delta\theta$) des Fahrzeugs basierend auf der begrenzungsbedingt entstandenen Lateral- und/oder Kurswinkelabweichung ($\Delta y_{Rest}$, $\Delta\theta_{Rest}$) zu modifizieren;
- eine modifizierte Lateral- und/oder Kurswinkelabweichung ($\Delta y'$, $\Delta\theta'$) zu bilden; und
- basierend auf der Sollgröße ($\Delta y_{soll}$, $\Delta\theta_{soll}$) und basierend auf der modifizierten Lateral- und/oder Kurswinkelabweichung ($\Delta y'$, $\Delta\Theta'$) einen Regelfehler ($\Delta y_{Err}$, $\Delta\theta_{Err}$) zu berechnen.

## Claims

1. A method for controlling a vehicle comprising a driver assistance system, by means of which at least semiautonomous driving functions are carried out, wherein a control loop (1) is provided to regulate the driving functions of the vehicle, which loop receives information ($\Delta y_{soll}$, $\Delta\theta_{soll}$) as a setpoint variable, that at least one controller is provided which limits at least one driving dynamics variable by means of a limiter (6) or by saturation, that by means of a vehicle dynamics model (4), the change in the driving dynamics variable ($\delta_{Rest}$) that arises as a result of the limitation is converted into a curvature and/or yaw rate residual variable ($K_{Fzg,Rest}$) of the vehicle, that the curvature and/or yaw rate residual variable ($K_{,Fzg,Rest}$) of the vehicle is converted, by means of a kinematic model (5) of the vehicle, into a lateral and/or course angle deviation ($\Delta y_{Rest}$, $\Delta\theta_{Rest}$) that arises due to the limiting, and that a measured lateral and/or course angle deviation ($\Delta y$, $\Delta\theta$) of the vehicle is modified based on the lateral and/or course angle deviation ($\Delta y_{soll}$, $\Delta\theta_{soll}$) that arises due to the limiting, by which a modified lateral and/or course angle deviation ($\Delta y'$, $\Delta\theta'$) is formed, and wherein a control error ($\Delta y_{Err}$, $\Delta\theta_{Err}$) is calculated based on the setpoint variable ($\Delta y_{soll}$, $\Delta\theta_{soll}$) and based on the modified lateral and/or course angle deviation ($\Delta y'$, $\Delta\theta'$).

2. The method as claimed in claim 1, **characterized in that** the driving dynamics variable is the steering angle, the steering torque, the vehicle curvature, the lateral acceleration of the vehicle, and/or the tire lateral force of the vehicle.

3. The method as claimed in claim 1 or 2, **characterized in that** the at least one regulator comprises a regulating cascade having a first and a second regulating device (2, 3).

4. The method as claimed in claim 3, **characterized in that** the first regulating device (2) comprises a kinematics controller and the second regulating device (3) comprises a driving dynamics controller.

5. The method as claimed in claim 3 or 4, **characterized in that** a setpoint curvature value ($K_{soll}$) is provided by the first regulating device (2).

6. The method as claimed in any one of claims 3 to 5, **characterized in that** a setpoint curvature value ($K_{soll}$) is converted into a setpoint steering angle ($\delta_v$) by the second regulating device (3).

7. The method as claimed in any one of claims 3 to 6, **characterized in that** the limitation of the driving dynamics variable takes place in the second regulating device (3).

8. The method as claimed in any one of the preceding claims, **characterized in that** the vehicle dynamics model (4) is designed to determine a curvature and/or yaw rate residual variable ($K_{Fzg,Rest}$) from a differential value of the driving dynamics variable ($\delta_{Rest}$) that arises due to limiting.

9. The method as claimed in claim 8, **characterized in that** a single-track model of the vehicle is implemented in the vehicle dynamics model (4).

10. The method as claimed in any one of the preceding claims, **characterized in that** the change in the driving dynamics variable ($\delta_{Rest}$) that arises due to the limiting is formed by calculating the difference between the unlimited driving dynamics variable ($\delta_v$) and the limited driving dynamics variable ($\delta_{v,\,lim}$).

11. The method as claimed in any one of the preceding claims, **characterized in that** the measured lateral and/or course angle deviation ($\Delta y$, $\Delta\theta$) is provided by an odometry system of the vehicle.

12. A system for controlling a vehicle comprising a driver assistance system, by means of which at least partially autonomous driving functions can be carried out, wherein, to regulate the driving functions of the vehicle, a control loop (1) is provided, which receives information ($\Delta y_{soll}$, $\Delta\theta_{soll}$) as a setpoint variable, that at least one controller is provided which limits at least one driving dynamics variable by means of a limiter (6) or by saturation, that the control loop is designed:

- to convert, by means of a vehicle dynamics model (4), the change in the driving dynamics variable ($\delta_{Rest}$) arising due to the limiting into a curvature and/or yaw rate residual variable ($K_{Fzg,Rest}$) of the vehicle;
- to convert the remaining curvature and/or yaw rate variable ($K_{Fzg,Rest}$) of the vehicle into a lateral and/or course angle deviation ($\Delta y_{Rest}$, $\Delta\theta_{Rest}$) that arises due to the limiting by means of a kinematic model (5) of the vehicle;
- to modify a measured lateral and/or course angle deviation ($\Delta y$, $\Delta\theta$) of the vehicle based on the lateral and/or course angle deviation ($\Delta y_{rest}$, $\Delta\theta_{rest}$) that arises due to the limiting;
- to form a modified lateral and/or course angle deviation ($\Delta y'$, $\Delta\theta'$); and
- to calculate a control error ($\Delta y_{Err}$, $\Delta\theta_{Err}$) based on the setpoint variable ($\Delta y_{soll}$, $\Delta\theta_{soll}$) and based on the modified lateral and/or course angle deviation ($\Delta y'$, $\Delta\Theta'$).

**Revendications**

1. Procédé de commande d'un véhicule comprenant un système d'assistance à la conduite, au moyen duquel des fonctions de conduite au moins partiellement autonomes sont exécutées, dans lequel, pour la régulation des fonctions de conduite du véhicule, une boucle de régulation (1) est prévue, laquelle reçoit, en tant que grandeur de consigne, des informations ($\Delta y_{soll}$, $\Delta\theta_{soll}$), qu'au moins un régulateur est prévu, lequel limite au moins une grandeur de dynamique de véhicule au moyen d'un limiteur (6) ou par saturation, qu'au moyen d'un modèle de dynamique de véhicule (4), la modification de la grandeur de dynamique du véhicule ($\delta_{Rest}$) apparue du fait de la limitation est transformée en une grandeur résiduelle de courbure et/ou de taux de lacet ($K_{Fzg,Rest}$) du véhicule, que la grandeur résiduelle de courbure et/ou de taux de lacet ($K_{Fzg,Rest}$) du véhicule est transformée au moyen d'un modèle cinématique (5) du véhicule en un écart latéral et/ou un écart d'angle de cap ($\Delta y_{Rest}$, $\Delta\theta_{Rest}$) apparu du fait de la limitation, et qu'un écart latéral et/ou un écart d'angle de cap mesuré ($\Delta y$, $\Delta\theta$) du véhicule est modifié sur la base de l'écart latéral et/ou de l'écart d'angle de cap ($\Delta y_{Rest}$, $\Delta\theta_{Rest}$) apparu du fait de la limitation, moyennant quoi un écart latéral et/ou un écart d'angle de cap modifié ($\Delta y'$, $\Delta\theta'$) est formé et dans lequel, sur la base de la grandeur de consigne ($\Delta y_{soll}$, $\Delta\theta_{soll}$) et sur la base de l'écart latéral et/ou de l'écart d'angle de cap modifié ($\Delta y'$, $\Delta\theta'$), une erreur de régulation ($\Delta y_{Err}$, $\Delta\theta_{Err}$) est calculée.

2. Procédé selon la revendication 1, **caractérisé en ce que** la grandeur de dynamique de véhicule est l'angle de braquage, le couple de braquage, la courbure de véhicule, l'accélération transversale du véhicule et/ou la force transversale des pneumatiques du véhicule.

3. Procédé selon la revendication 1 ou 2, **caractérisé en ce que** l'au moins un régulateur comprend une cascade de régulation comportant un premier et un second dispositif de régulation (2, 3).

4. Procédé selon la revendication 3, **caractérisé en ce que** le premier dispositif de régulation (2) comprend une régulation cinématique et le second dispositif de régulation (3) comprend une régulation de dynamique de véhicule.

5. Procédé selon la revendication 3 ou 4, **caractérisé en ce que** le premier dispositif de régulation (2) fournit une valeur de courbure de consigne ($K_{soll}$).

6. Procédé selon l'une quelconque des revendications 3 à 5, **caractérisé en ce que** le second dispositif de régulation (3) convertit une valeur de courbure de consigne ($K_{soll}$) en un angle de braquage de consigne ($\delta_v$).

7. Procédé selon l'une quelconque des revendications 3 à 6, **caractérisé en ce que** la limitation de la grandeur de dynamique de véhicule a lieu dans le second dispositif de régulation (3).

8. Procédé selon l'une quelconque des revendications précédentes, **caractérisé en ce que** le modèle de dynamique de véhicule (4) est conçu pour déterminer, à partir d'une valeur différentielle de la grandeur de dynamique de véhicule ($\delta_{Rest}$) apparue du fait de la limitation, une grandeur résiduelle de courbure et/ou de taux de lacet ($K_{Fzg,Rest}$).

9. Procédé selon la revendication 8, **caractérisé en ce que**, dans le modèle de dynamique de véhicule (4), un modèle à une seule voie du véhicule est mis en œuvre.

10. Procédé selon l'une quelconque des revendications précédentes, **caractérisé en ce que** la modification de la grandeur de dynamique de véhicule ($\delta_{Rest}$) résultant de la limitation est obtenue par une différence entre la grandeur de dynamique de véhicule non limitée ($\delta_v$) et la grandeur de dynamique de véhicule limitée ($\delta_{v,lim}$).

11. Procédé selon l'une quelconque des revendications précédentes, **caractérisé en ce que** l'écart latéral et/ou l'écart d'angle de cap mesuré ($\Delta y$, $\Delta\theta$) est fourni par un système d'odométrie du véhicule.

12. Système de commande d'un véhicule comprenant un système d'assistance à la conduite, au moyen duquel des fonctions de conduite au moins partiellement autonomes peuvent être exécutées, dans lequel, pour la régulation des fonctions de conduite du véhicule, une boucle de régulation (1) est prévue, laquelle reçoit, en tant que grandeur de consigne, des informations ($\Delta y_{soll}$, $\Delta\theta_{soll}$), qu'au moins un régulateur est prévu, lequel limite au moins une grandeur de dynamique de véhicule au moyen d'un limiteur (6) ou par saturation, que la boucle de régulation est conçue pour:

    - convertir le changement de la grandeur de dynamique de véhicule ($\delta_{Rest}$) résultant de la limitation en une grandeur résiduelle de courbure et/ou de taux de lacet ($K_{Fzg,Rest}$) du véhicule au moyen d'un modèle de dynamique de véhicule (4) ;
    - convertir la grandeur résiduelle de courbure et/ou de taux de lacet ($K_{Fzg,Rest}$) du véhicule, au moyen d'un modèle cinématique (5) du véhicule, en un écart latéral et/ou un écart d'angle de cap ($\Delta y_{Rest}$, $\Delta\theta_{Rest}$) apparu du fait de la limitation ;
    - modifier un écart latéral et/ou un écart d'angle de cap mesuré ($\Delta y$, $\Delta\theta$) du véhicule sur la base de l'écart latéral et/ou de l'écart d'angle de cap

$(\Delta y_{Rest}, \Delta \theta_{Rest})$ apparu du fait de la limitation ;
- former un écart latéral et/ou un écart d'angle de cap modifié $(\Delta y', \Delta \theta')$ ; et
- calculer une erreur de régulation $(\Delta y_{Err}, \Delta \theta_{Err})$ sur la base de la grandeur de consigne $(\Delta y_{soll}, \Delta \theta_{soll})$ et sur la base de l'écart latéral et/ou de l'écart d'angle de cap modifié $(\Delta y', \Delta \theta')$.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 113126623 A
- DE 102019114585 A1
- DE 4124654 A1
- DE 102009050777 A1